# EUROPÄISCHE PATENTANMELDUNG

(11) **EP 1 837 449 A2**
(43) Veröffentlichungstag der Anmeldung: **26.09.2007**
(21) Anmeldenummer: 07005581.9
(22) Anmeldetag: 19.03.2007
(51) Int. Cl.: E04B 1/94

(54) **Dekorativ beschichtete Brandschutzplatte**

(30) Priorität: 22.03.2006 DE 202006004493 U
(71) Anmelder: Fichtner, Renate, 08525 Plauen (DE)
(72) Erfinder: Fichtner, Renate, 08525 Plauen (DE)
(74) Vertreter: Neumann, Steffen

(57) **Zusammenfassung**

Die Erfindung betrifft eine dekorativ beschichtete Brandsähutzplatte, welche im Bauwesen insbesondere für Boden-, aber auch Wand- und Decken-Brandschutzverkleidungen Einsatz findet, indem sie die VorausAetzungen für die A1/A2 Norm erfüllt.

Während es Aufgabe der Erfindung ist, eine vielseitig dekorativ beschichtete Brandschutzplatte für das Bauwesen zu schaffen, welche trotzdem die Norm für die Brandschutzklasse A1/A2 erfüllt, wird diese Aufgabenstellung dadurch gelöst, dass die Oberfläche einer nichtbrennbaren Faserplatte, vorzugsweise einer Gipsfaserplatte, als Trägerplatte (3) mit einer Flächenbeschichtung (1) versehen ist, welche aus einer Grundierung (1.1), einer Gegenzug-Grundierung (2), einer dekorativen Beschichtung (1.2) sowie einer darauf aufgebrachten Oberflächenversiegelung (1.3) besteht.

## Beschreibung

Die Erfindung betrifft eine dekorativ beschichtete Brandschutzplatte, welche im Bauwesen insbesondere für Boden-, aber auch Wand- und Decken-Brandschutzverkleidungen Einsatz findet, indem sie die Voraussetzungen für die A1/A2 Norm erfüllt. Erfindungsgemäß handelt es sich um eine nichtbrennbare Faserplatte, welche als zementgebundene Spannplatte oder Gipsfaserplatte, Zementplatte, aber auch glasfasergebundene Platte, beziehungsweise Glimmerstein, ausgestaltet ist. Neben den vorgenannten Einsatzgebieten erfolgt ihre Verwendung ferner als schallabsorbierendes Bauelement, als Möbelbauplatte und Fronten, generell als Innenausbauplatten, als Treppenstufen sowie für Innentüren und Zargen.

Bisher sind als Stand der Technik Faserträgerplatten mit dekorativen herkömmlichen Beschichtungen wie Furniere, Schichtstoffe mit unterschiedlichen Stärken und Qualitäten oder PVC, CV, Lino oder auch PU-Beschichtungen bekannt. Diese Platten werden als Wand- und Decken- oder auch im Bodenbereich eingesetzt.

Diesen Lösungen haftet jedoch insgesamt der Nachteil an, dass mit ihnen eine Verbundplatte entstanden ist, welche nur mit einer Brandklasseneinstufung brennbar, beziehungsweise schwer entflammbar einzuordnen ist, wodurch ihr Einsatz begrenzt wird.

Ferner ist mit der DE 202 21 051 U1 ein Wandbelag als Ramm- und Wandschutz und/oder Wandbelag bekannt, welcher aus einem oder mehreren in einem Fugenverband verlegten und vollflächig mit dem Untergrund verklebten Gipsfaserplattenelementen besteht. Dieser Wandbelag ist dadurch gekennzeichnet, dass die Platten nach Bauklasse A2 - DIN 4102 nicht brennbar sind. Diese Lösung beinhaltet auch eine keramische Beschichtung und ist nicht brennbar. Sie wird jedoch meist nur als Wand- und Raumschutz eingesetzt.

Dieser Lösung haftet jedoch mit seiner Beschichtung der Nachteil an, dass nur ein oder bestenfalls zwei Unifarben gestalterisch zur Ausführung kommen und nicht dekorativ mit allen Dekoren welche technisch eingestellt werden können, beispielsweise Holz oder Stein sowie Fantasiedekore, geschippte Farben und ähnliche Gestaltungen, nicht möglich sind. Ein weiterer Nachteil bei Keramikbeschichtung ist das Erfordernis einer weiteren Bearbeitung mittels Werkzeug als Bauplatte.

Die Erfindung stellt sich daher die Aufgabe eine vielseitig dekorativ beschichtete Brandschutzplatte für das Bauwesen zu schaffen, welche trotzdem die Norm für die Brandschutzklasse A1/A2 erfüllt. Durch die erfindungsgemäße vielseitig dekorative Beschichtung der Brandschutzplatten mittels verschiedener Varianten wie Prägung, Direktdruck, Papierdruck aufkaschieren sowie deren Oberflächenversiegelung, soll es keinerlei Einschränkungen im Brandverhalten zwischen Träger und Oberfläche geben.

Diese Aufgabe wird gemäß der Erfindung bei einer gattungsgemäßen Brandschutzplatte dadurch gelöst, dass die Oberfläche einer nichtbrennbaren Faserplatte, vorzugsweise einer Gipsfaserplatte, als Trägerplatte mit einer Flächenbeschichtung versehen ist, welche aus einer Grundierung, einer Gegenzug-Grundierung, einer dekorativen Beschichtung sowie einer darauf aufgebrachten Oberflächenversiegelung besteht.

Die Merkmale der nachfolgenden Ansprüche 2 bis 6 stellen vorteilhafte Ausgestaltungen der Erfindung dar.

Das Wesen der Erfindung besteht in einer nichtbrennbaren Faserplatte als Trägerplatte, welche durch Beschichtung, Lackierung, Versiegelung und Kantenbearbeitung eine vielseitig dekorative Ausgestaltung erfährt. Dabei wird ausgangsseitig als Material der Trägerplatte eine nichtbrennbare Faserplatte verwendet. Diese kann eine zementgebundene Spannplatte oder Gipsfaserplatte, Zementplatte, aber auch eine glasfasergebundene Platte oder Glimmerstein, beziehungsweise generell eine Brandschutzplatte sein.
Die Beschichtung der Trägerplatte wird vorgenommen, indem die Trägerplatte grundiert wird, um die Oberfläche zu härten sowie alle Poren zu schließen. Die Oberfläche erhält durch die Grundierung und Zwischenbearbeitung eine hinreichend glatte Oberfläche. Das Dekorieren erfolgt mittels Trockenlack, insbesondere Touch-Wood-Verfahren, oder aber Papierdruckbeschichtung sowie Direktdruck in allen Designs.
Die Versiegelung der Flächenbeschichtung erfolgt durch einen besonders gewählten Oberflächenbeschichtungsaufbau, welcher je nach seinem Einsatzbereich, nämlich Boden, Wand oder Decke, aber auch nach Objekt, ausgeführt wird, wodurch letztlich die Brandschutzplatte ihre notwendige Oberflächenhärte erhält.

Bei der Kantenbearbeitung - bei Sichtkanten abgerundet beziehungsweise angefräst - wird der gleiche Aufbau, wie bei der Flächengestaltung gewählt. Die Gesamtstärke des Auftrages der Flächenbeschichtung soll insgesamt weniger als 0,5 mm betragen. Die Verlegetechnik bei Boden-, Wand- oder Deckenverkleidung erfolgt herkömmlich mit Nut und Feder oder aber auch stumpf bei verdeckter Verschraubung rückseitig mit Klippprofilen oder mit Klickprofilen. Alle bisher bekannten Systeme hierfür sind anwendbar.
Die Erfindung soll nachstehend an einem Ausführungsbeispiel näher erläutert werden. In der zugehörigen Zeichnung zeigt:

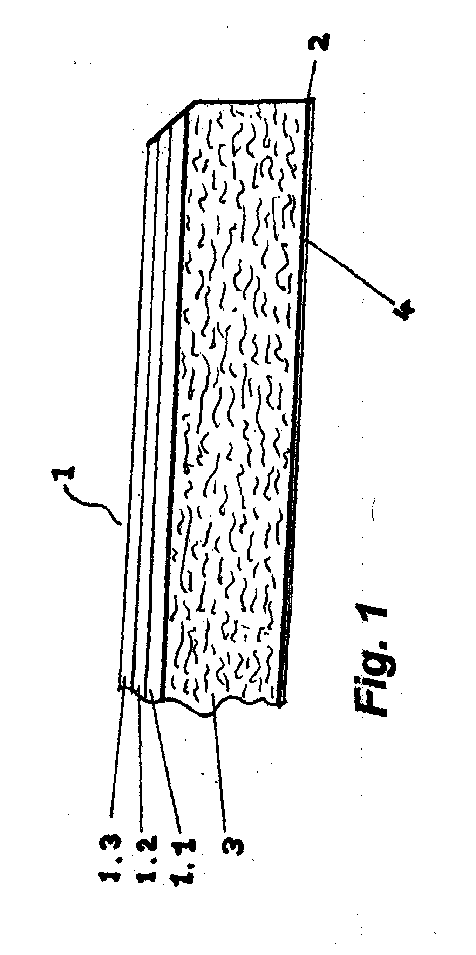

Fig. 1: den Aufbau der Brandschutzplatte mit Schichtaufbau

Eine Trägerplatte 3, als nichtbrennbare Faserplatte, ist mit einer Flächenbeschichtung 1 ausgestattet. Die Versiegelung der Flächenbeschichtung 1 erfolgt durch einen besonders gewählten Oberflächenbeschichturigsaufbau je nach Einsatzbereich, nämlich dem Boden, der Wand oder der Decke, wodurch die Trägerplatte 3 als Brandschutzplatte ihre hohe Oberflächenhärte erhält. Die Flächenbeschichtung 1 besteht mit ihren einzelnen Schichten aus einer Grundierung 1.1, einer dekorativen Beschichtung 1.2 sowie einer Oberflächenversiegelung 1.3. Schließlich ist die Flächenbeschichtung 1 noch mit einer Gegenzug-Grundierung 2 ausgestattet. Eine Kantenbeschichtung 4 und eine Profilierung werden je nach dem Einsatzzweck der Trägerplatte 3 individuell vorgenommen. Die Trägerplatte 3 wird mit einer Flächenbeschichtung 1 von < 0,5 mm ausgestattet, wodurch das Brandverhalten der Trägerplatte 3 nicht beeinträchtigt wird. Letztlich werden die Sichtkanten der Trägerplatten 3 abgerundet oder angefräst ausgeführt und der gleiche Aufbau wie bei der Flächenbeschichtung 1 gewählt.

### Bezugszeichenliste

- 1: Flächenbeschichtung
- 1.1: Grundierung
- 1.2: dekorative Beschichtung
- 1.3: Oberflächenversiegelung
- 2: Gegenzug-Grundierung
- 3: Trägerplatte
- 4: Kantenbeschichtung/Proftlierung

## Patentansprüche

1. Dekorativ beschichtete Brandschutzplatte,
**dadurch gekennzeichnet,**
**dass** die Oberfläche einer nichtbrennbaren Faserplatte, vorzugsweise einer Gipsfaserplatte, als Trägerplatte (3) mit einer Flächenbeschichtung (1) versehen ist, welche aus einer Grundierung (1.1), einer Gegenzug-Grundierung (2), einer dekorativen Beschichtung (1.2) sowie einer darauf aufgebrachten Oberflächenversiegelung (1.3) besteht.

2. Dekorativ beschichtete Brandschutzplatte nach Anspruch 1,
**dadurch gekennzeichnet,**
**dass** die Trägerplatte (3) zur Härtung der Oberfläche und zur Schließung der Poren der nichtbrennbaren Faserplatte mit einer Grundierung (1.1) versehen ist.

3. Dekorativ beschichtete Brandschutzplatte nach den Ansprüchen 1 und 2,
**dadurch gekennzeichnet,**
**dass** die Trägerplatte (3) noch mit einer zusätzlichen Gegenzug-Grundierung (2) ausgestattet ist.

4. Dekorativ beschichtete Brandschutzplatte nach den Ansprüchen 1 bis 3,
**dadurch gekennzeichnet,**
**dass** die Trägerplatte (3) mit einer dekorativen Beschichtung (1.2) mittels Prägen, Direktdruck oder Papierdruck, welcher aufkaschiert wird, ausgestattet ist, wodurch uneingeschränkt beliebige Dekore wählbar sind.

5. Dekorativ beschichtete Brandschutzplatte nach den Ansprüchen 1 bis 4,
**dadurch gekennzeichnet,**
**dass** die stirnseitige Kantenbeschichtung (4) der Trägerplatte (3) die gleiche Flächenbeschichtung (1) in Ansatz gebracht wird, wie bei ihrer Oberfläche.

6. Dekorativ beschichtete Brandschutzplatte nach den Ansprüchen 1 bis 5,
**dadurch gekennzeichnet,**
**dass** die Flächenbeschichtung (1) der Trägerplatte (3) mit ihrer Grundierung (1.1), ihrer Gegenzug-Grundierung (2), der dekorativen Beschichtung (1.2) sowie der Oberflächenversiegelung (1.3) insgesamt < 0,5 mm beträgt, wodurch das Brandverhalten der Trägerplatte (3) nicht beeinträchtigt wird.
